# EUROPÄISCHE PATENTSCHRIFT

(11) **EP 1 370 886 B1**
(45) Veröffentlichungstag und Bekanntmachung des Hinweises auf die Patenterteilung: **11.03.2009**
(21) Anmeldenummer: 01990361.6
(22) Anmeldetag: 21.12.2001
(51) Int. Cl.: G01S 7/03, H01Q 1/52, H01Q 9/04

(54) **ANTENNE MIT KOPLANAREM SPEISENETZWERK ZUM SENDEN UND/ODER EMPFANGEN VON RADARSTRAHLEN**
ANTENNA WITH COPLANAR WAVEGUIDE FEED FOR THE TRANSMISSION AND/OR RECEPTION OF RADAR BEAMS
ANTENNE AVEC DE RESEAU D'ALIMENTATION DU TYPE COPLANAIRE POUR RECEVOIR ET/OU EMETTRE DES FAISCEAUX RADAR

(30) Priorität: 03.02.2001 DE 10104864
(43) Veröffentlichungstag der Anmeldung: 17.12.2003
(73) Patentinhaber: ROBERT BOSCH GMBH, 70442 Stuttgart (DE)
(72) Erfinder: SCHMIDT, Ewald, 71634 Ludwigsburg (DE); PFIZENMAIER, Heinz, 71540 Murrhardt (DE); IRION, Hans, 71364 Winnenden (DE); HASCH, Juergen, 73066 Uhingen (DE)
(86) Internationale Anmeldenummer: PCT/DE2001/004850
(87) Internationale Veröffentlichungsnummer: WO 2002/063333

(56) Entgegenhaltungen:
- EP-A- 0 492 357
- EP-A- 0 989 628
- DE-A- 4 130 493
- US-A- 5 694 134
- US-A- 5 764 189
- PATENT ABSTRACTS OF JAPAN vol. 018, no. 464 (E-1598), 29. August 1994 (1994-08-29) & JP 06 152237 A (NIPPON AVIONICS CO LTD), 31. Mai 1994 (1994-05-31)

## Beschreibung

### Stand der Technik

Die vorliegende Erfindung betrifft eine Vorrichtung zum Senden und/oder Empfangen von Radarstrahlen, wobei auf einer Seite einer Leiterplatte mindestens eine Antenne und auf der anderen Seite der Leiterplatte elektrische Schaltkreise angeordnet sind und Mittel zur elektromagnetischen Abschirmung der elektrischen Schaltkreise gegenüber der mindestens einen Antenne vorhanden sind.

Ein solches Radargerät ist aus der WO 96/19737 bekannt. Mit dem hierin beschriebenen Radargerät können z. B. in einer Wand oder im Erdreich eingeschlossene Objekte detektiert werden. Damit z. B. bei Bohrungen in einer Wand die darin eingeschlossenen Objekte - z. B. Stahlarmierungen, Stromleitungen, Wasserleitungen und dergleichen - vor Zerstörung sicher sind, sollte dem Handwerker eine präzise Information über den Ort, d. h. die Wegposition auf der Wandoberfläche und die Tiefe in der Wand, eines eingeschlossenen Objektes vermittelt werden. Ein Radargerät besteht, wie auch in der WO 96/19737 beschrieben, üblicherweise aus einem "Frontend", das ist eine Radar Sende- und Empfangseinheit, und einer Anzeigevorrichtung. Bei dem in der WO 96/19737 offenbarten Frontend sind auf einer Seite einer Leiterplatte eine Sendeantenne und eine Empfangsantenne angeordnet, und auf der anderen Seite der Leiterplatte befinden sich elektrische Schaltkreise. Die Sende- und die Empfangsantenne sind als hornartige Hohlräume ausgebildet, in denen schleifenförmige Drähte als Strahlerelemente installiert sind. Eine elektromagnetische Abschirmung der Schaltkreise auf der den Antennen gegenüberliegenden Leiterplattenseite geschieht durch die Wandungen der Antennenhörner, die auf der den Schaltkreisen gegenüberliegenden Seite der Leiterplatte befestigt sind. Die der Druckschrift WO 96/19737 zu entnehmende Ausführung des Front-Ends eines Radargerätes ist fertigungstechnisch relativ aufwendig, weil es aus einer Vielzahl von Einzelteilen besteht.

Aus der US 5,764,189 ist ein Doppler-Radarmodul bekannt, welches in Mikrostreifenleitungstechnik aufgebaut ist und für eine Betriebsfrequenz von 2,45 GHz ausgelegt ist. Das Doppler-Radarmodul der US 5,764,189 setzt sich zusammen aus einer Flächenantenne, einer Multilayer Platine mit einer Schaltung zum Senden und Empfangen von Mikrowellen und einem aus Metall gefertigten Gehäuse. Die Flächeantenne besitzt einen Flächendipol, dessen strahlende Kanten kürzer sind als deren Abstand voneinander, sowie ein Substrat, dessen Dicke größer als 3mm ist.

Die EP 0 989 628 A1 offenbart eine Streifen-Antenne mit gebogener Grundplatte, welche eine Abstrahlfläche, eine Grundfläche und Mittel zum Zuführen der Abstrahlfläche umfasst. Die Grundfläche weist dabei eine Basisebene, mit einer ersten und einer zweiten Kante auf, die parallel zu der Abstrahlfläche der Antenne verläuft, jedoch von dieser getrennt ist. Des weiteren umfasst die Grundfläche einen ersten vertikalen Rand, welcher sich senkrecht von der ersten Kante der Basisebene aus erstreckt. Auf diese Weise ergibt sich ein "L"- oder "U"- förmiger Querschnitt der Anordnung ergibt. Bei einem solchen Aufbau wird eine kapazitive Kopplung in dem Bereich zwischen der Abstrahlfläche und der Grundfläche in der Nähe des vertikalen Rands induziert, so dass eine Breitband impedanzanpassung und ein vergrößertes Forward-to-Back-Verhältnis erreicht werden.

Der Erfindung liegt die Aufgabe zu Grunde, eine Vorrichtung zum Senden und/oder Empfangen von Radarstrahlen der eingangs genannten Art anzugeben, bei der die Abschirmung zwischen einer Sende- und/oder Empfangsantenne und elektrischen Schaltkreisen auf eine sehr raumsparende weise und mit fertigungstechnisch sehr einfach auszuführenden Mitteln realisierbar ist.

### Vorteile der Erfindung

Die genannte Aufgabe wird mit den Merkmalen des Anspruchs 1 dadurch gelöst, dass auf der antennenseitigen Oberfläche der Leiterplatte ein in Koplanar-Leitungstechnik ausgeführtes Speisenetzwerk, mit dem die mindestens eine Antenne kontaktiert ist, aufgebracht ist und dass der auf Masse liegende Außenleiter der Koplanar-Leitung die antennenseitige Oberfläche der Leiterplatte soweit überdeckt, dass dadurch die geforderte Abschirmung zwischen der Antenne und den elektrischen Schaltkreisen entsteht.

Gemäß der Erfindung erfüllt das für die Antenne erforderliche Speisenetzwerk gleichzeitig die Funktion einer elektromagnetischen Abschirmung der Antenne gegenüber den elektrischen Schaltkreisen auf der gegenüberliegenden Seite der Leiterplatte. Damit sind keine zusätzlichen Mittel zur elektromagnetischen Abschirmung erforderlich, die den fertigungstechnischen Aufwand für die Radarvorrichtung erhöhen und auch entsprechenden Raum in der Vorrichtung in Anspruch nehmen.

Vorteilhafte Weiterbildungen und Ausführungen der Erfindung gehen aus den Unteransprüchen hervor.

Das Speisenetzwerk ist beispielsweise als Leistungsteiler ausgebildet mit einem Tor, das mit einem Schaltkreis auf der dem Leistungsteiler gegenüberliegenden Seite der Leiterplatte kontaktiert ist, und mit zwei weiteren Toren, die mit zwei Anschlüssen der mindestens einen Antenne kontaktiert sind.

Die mindestens eine Antenne besteht vorzugsweise aus einer als Strahlerelement wirkenden leitenden Platte, die mit Abstand über der Leiterplatte angeordnet ist. In einer sehr einfachen Ausführung weist die leitende Platte der Antenne mindestens eine Stütze auf, welche auf der Leiterplatte fixierbar ist. Besonders vorteilhaft ist es, dass die mindestens eine Stütze eine elektrische Verbindung zwischen der leitenden Platte und dem Speisenetzwerk herstellt.

Die Leiterplatte kann aus mehreren übereinander gestapelten dielektrischen Schichten mit unterschiedlichen Dielektrizitätskonstanten bestehen, wobei diejenige dielektrische Schicht, auf der das Speisenetzwerk und die Antenne angeordnet sind, eine geringere Dielektrizitätskonstante aufweist als diejenige dielektrische Schicht, auf der sich die elektrischen Schaltkreise befinden. Bei einer mehrschichtigen Leiterplatte lässt sich die elektromagnetische Abschirmung noch dadurch erhöhen, dass zwischen zwei dielektrischen Schichten eine Masseleitung angeordnet ist, die mit dem Außenleiter des koplanaren Speisenetzwerks über Durchkontaktierungen in der Leiterplatte verbunden ist. Ebenso kann eine größere Abschirmwirkung dadurch erzielt werden, dass auf der mit den elektrischen Schaltkreisen bestückten Seite der Leiterplatte eine Masseleitung aufgebracht ist, die mit dem Außenleiter der koplanaren Speiseleitung und/oder mit ein oder mehreren anderen im Inneren der Leiterplatte vorhandenen Masseleitungen über Durchkontaktierungen in der Leiterplatte verbunden sind.

### Zeichnung

Anhand von in der Zeichnung dargestellten Ausführungsbeispielen wird nachfolgend die Erfindung näher erläutert. Es zeigen:
Figur 1 in perspektivischer Darstellung eine Antenne über einer Leiterplatte,
Figur 2 eine Draufsicht auf einen Ausschnitt einer Leiterplatte mit einem Speisenetzwerk und
Figur 3 eine Seitenansicht einer Leiterplatte mit einer Antenne auf der Oberseite und elektrischen Schaltkreisen auf der Unterseite.

### Beschreibung von Ausführungsbeispielen

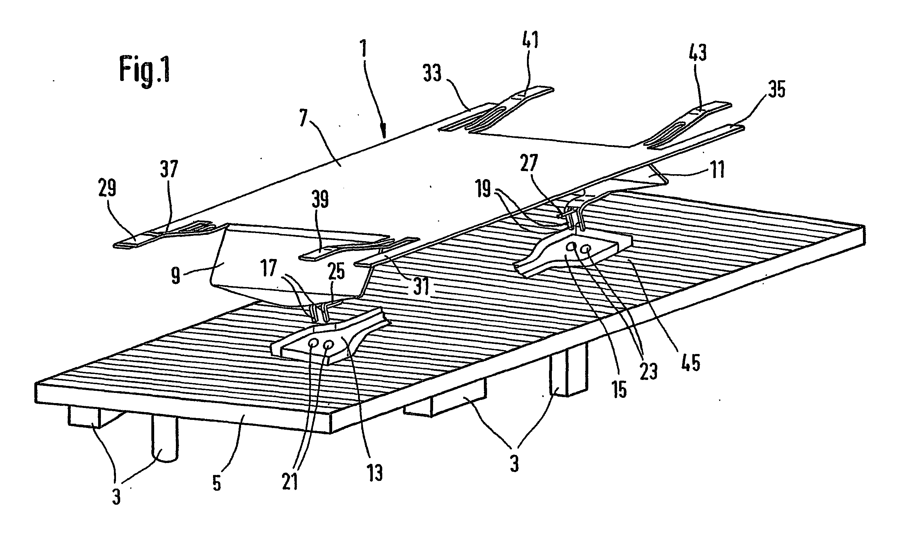

In der Figur 1 ist eine perspektivische Darstellung eines sogenannten Frontends eines Radargeräts dargestellt, das z. B. zum Detektieren von in einer Wand eingeschlossenen Objekten vorgesehen ist. Neben dem Frontend besitzt ein Radargerät üblicherweise noch eine Anzeigeeinheit, auf der Ortsangaben über ein aufgespürtes Objekt in einer Wand dargestellt werden können. Auf die Anzeigeeinheit wird hier nicht näher eingegangen, da sie nicht Gegenstand der Erfindung ist. Mit einem Frontend ist derjenige Geräteteil gemeint, in dem alle Sende- und Empfangseinrichtungen untergebracht sind. Auch Schaltkreise für die, vorzugsweise digitale, Verarbeitung der Empfangssignale können in dem Frontend angeordnet sein.

Das Frontend des Radargeräts besteht im Wesentlichen aus zwei Bauteilgruppen. Die eine Gruppe von Bauteilen sind elektrische Schaltkreise zur Verarbeitung von Hochfrequenzsignalen oder Niederfrequenzsignalen oder Digitalsignalen. Die zweite Baugruppe des Frontends besteht aus einer Sende- und Empfangs-Antennenanordnung. Das Senden und Empfangen von Radarsignalen kann entweder mit einer einzigen Antenne oder mit getrennten Antennen erfolgen.

Wie die perspektivische Darstellung in Figur 1 verdeutlicht, sind beide Baugruppen, nämlich einerseits eine Antenne 1 und andererseits verschiedene Schaltkreise 2 auf einer Leiterplatte 3 angeordnet. Und zwar sind die Antenne 1 und die Schaltkreise 2 auf einander gegenüberliegenden Seiten der Leiterplatte 3 aufgebracht.

Um das spezielle in der Figur 1 dargestellte Ausführungsbeispiel einer Antenne 1 und deren Anschlüsse an ein Speisenetzwerk auf der Leiterplatte 5 deutlicher darstellen zu können, ist die Antenne 1 in einer Explosionsdarstellung über der Leiterplatte 5 gezeichnet.

Die aus der Figur 1 hervorgehende Antenne 1 besteht in fertigungstechnisch vorteilhafter Weise aus einem Blechbiegeteil. Die Antenne 1 weist eine als Strahlelement wirkende, zur Leiterplatte 5 parallel verlaufende leitende Platte 7 auf. Diese leitende Platte 7 kann eine rechteckige Form, wie in der Figur 1 dargestellt, haben. Sie kann aber auch eine runde, ovale oder ähnliche Form aufweisen. An zwei gegenüberliegenden Rändern der leitenden Platte 1 sind zwei Blechsegmente 9 und 10 abgewinkelt, die als Leitungsarme zur Ankopplung der Antenne an einem Speisenetzwerk auf der Leiterplatte 5 und als Abstandhalter für die leitende Platte 7 über der Leiterplatte 5 dienen.

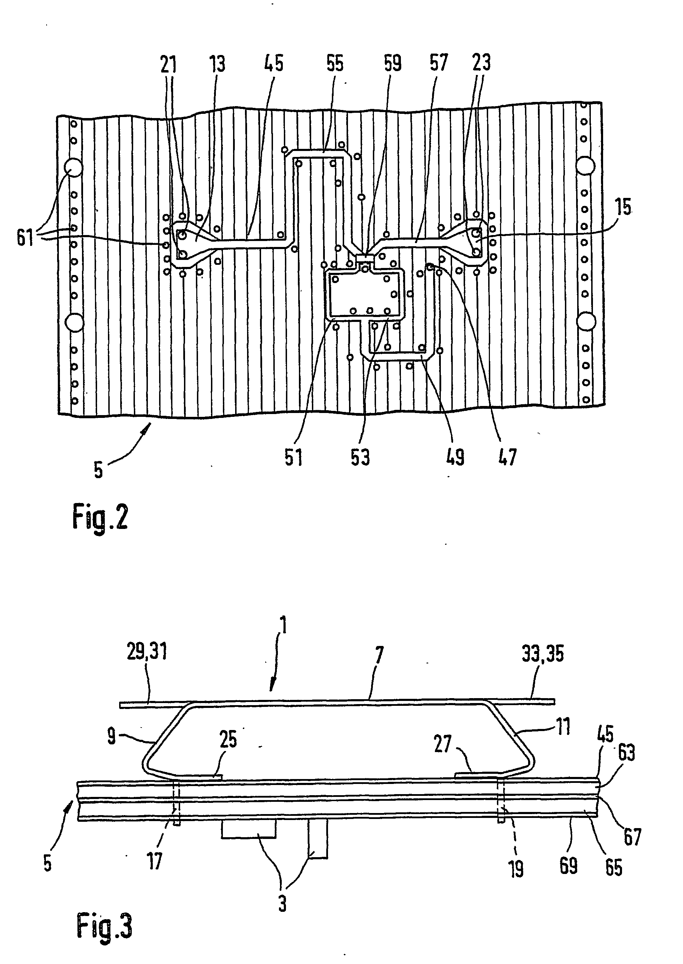

Von einem planaren Speisenetzwerk auf der Leiterplatte 5 sind in der Figur 1 lediglich Anschlusssegmente 13 und 15 dargestellt. Eine detaillierte Darstellung eines Ausführungsbeispiels für ein Speisenetzwerk ist in der Figur 2 dargestellt und wird weiter unten noch näher beschrieben.

Die Enden der seitlichen Blechsegmente 9 und 11 sind nach innen hin abgebogen und weisen Kontaktstifte 17 und 19 auf, die so gebogen sind, dass sie senkrecht zur Leiterplatte 5 orientiert sind und dort in Öffnungen 21 und 23 im Bereich der.Anschlusssegmente 13 und 15 in die Leiterplatte 5 einsteckbar sind. Die Kontaktstifte 17 und 19 gehen damit eine elektrische Verbindung mit den Anschlusssegmenten 13 und 15 des Speisenetzwerks ein. Die in die Öffnungen 21 und 23 in der Leiterplatte 5 eingesteckten Kontaktstifte 17 und 19 stellen aber nicht nur eine elektrische Verbindung zwischen der Antenne 1 und dem Speisenetzwerk her, sondern sie bewirken auch eine stabile Fixierung der Antenne 1 auf der Leiterplatte 5. Abweichend von dem in der Figur 1 dargestellten Ausführungsbeispiel können anstelle von zwei Kontaktstiften 17 und 19 an den Enden der Blechsegmente 9 und 11 auch nur ein Kontaktstift oder mehr als zwei Kontaktstifte vorgesehen werden.

Neben den Kontaktstiften 17 und 19 kann an jedem Ende des Blechsegments 9 und 11 noch eine Lötfahne 25, 27 vorgesehen werden, die auf das Anschlusssegment 13, 15 des Speisenetzwerks auf der Leiterplatte 5 aufgelötet werden kann. Mit den Lötfahnen 25 und 27 wird einerseits der elektrische Kontakt und auch noch die mechanische Halterung der Antenne 1 auf der Leiterplatte verbessert.

Durch die als Abstandhalter wirkenden Blechsegmente 9 und 11 wird die leitende Platte 7 der Antenne 1 in einem gewissen Abstand über der das Speisenetzwerk tragenden Leiterplatte 5 gehalten. Damit befindet sich zwischen der leitenden Platte 7 und der Leiterplatte 5 ein Dielektrikum mit sehr niedriger Permitivität, nämlich Luft, wodurch ein sehr breitbandiger Betrieb der Antenne möglich wird. Eine Optimierung hinsichtlich der Bandbreite der Antenne 1 kann dadurch erfolgen, dass, wie der Figur 1 zu entnehmen ist, die leitende Platte 7 neben den Leitungsarmen 9 und 11 zungenartige Verlängerungen 29, 31, 33, 35, 37, 39, 41 und 43 aufweist. In dem dargestellten Ausführungsbeispiel sind jeweils zwei Verlängerungen 29, 37; 31, 39; 33, 41 und 35, 43 nebeneinander angeordnet. Mit den zwei nebeneinander angeordneten Verlängerungen wird eine Verbesserung der Anpassung der Antenne in Richtung tieferer Frequenzbereiche bewirkt. Abweichend von dem dargestellten Ausführungsbeispiel kann auch seitlich von den Leitungsarmen 9 und 11 jeweils nur eine Verlängerung 29, 31, 33, 35 vorgesehen werden. Auch sie allein bewirkt eine die Bandbreite der Antenne 1 verbessernde Anpassung. Wenn kein sehr breitbandiger Betrieb der Antenne 1 erforderlich ist, kann auf alle Verlängerungen auch verzichtet werden.

Bei der in der Figur 1 beispielhaft dargestellten Antenne 1 ist an jeder Ecke der leitenden Platte 7 eine der Verlängerungen 37, 39, 41, 43 über der Platte 7 herausgebogen. Diese herausgebogenen Verlängerungen 37, 39, 41, 43 können beispielsweise die Antenne 1 gegenüber einer die Antenne abdeckenden Gehäusewand abstützen. Dadurch erhält die Antenne 1 eine definierte stabile Lage in einem (in der Zeichnung nicht dargestellten) Gehäuse, in dem die Leiterplatte 5 mit der Antenne 1 und den elektrischen Schaltkreisen 3 untergebracht ist.

Die erfindungsgemäße Radarvorrichtung ist nicht gebunden an eine Antenne gemäß dem in der Figur 1 dargestellten Ausführungsbeispiel. Ein wesentliches Merkmal einer hier einsetzbaren Antenne besteht darin, dass die als Strahlerelement wirkende leitende Platte 7 in einem Abstand über der Leiterplatte 5 gehalten wird. Dabei können ein oder mehrere Stützen für die leitende Platte, egal wie sie ausgebildet sind, vorgesehen werden, welche auf der Leiterplatte fixierbar sind und die leitende Platte der Antenne, im Abstand über der Leiterplatte 5 halten. Besonders vorteilhaft ist es, wenn diese Stützen nicht nur eine mechanische Fixierung der Antenne auf der Leiterplatte 5 besorgen, sondern auch noch elektrische Verbindungselemente zwischen der Antenne und dem Speisenetzwerk auf der Leiterplatte 5 herstellen. Dadurch, dass gemäß dem in der Figur 1 dargestellten Ausführungsbeispiel der Antenne 1 mehr als nur eine Stütze (Blechsegmente 9, 11 mit Kontaktstiften 17, 19) vorhanden ist, erhält die Antenne 1 eine höhere Stabilität auf der Leiterplatte 5.

Als Speisenetzwerk kann auf der Leiterplatte 5 ein beliebiges, in planarer Leitungstechnik ausgeführtes Netzwerk aufgebracht werden, das in der Lage ist, der Antenne 1 Sendesignale zuzuführen bzw. Empfangssignale auszukoppeln und eine Verbindung zu den elektrischen Schaltkreisen 3 auf der gegenüberliegenden Seite der Leiterplatte 5 herzustellen.

Weil die in der Figur 1 dargestellte Antenne 1 zwei Anschlüsse aufweist, muss das Speisenetzwerk ein Leistungsteiler sein, der z. B. ein Sendesignal in zwei um 180° gegeneinander phasenverschobene Signalanteile aufteilt und sie an die Leitungsarme 9 und 11 der Antenne 1 ankoppelt. Wird die Antenne 1 auch als Empfangsantenne benutzt, so führt derselbe Leistungsteiler die an den Leitungsarmen 9 und 11 ausgekoppelten, um 180° gegeneinander phasenverschobenen Signalanteile zu einem gemeinsamen Empfangssignal zusammen.

Ein Ausführungsbeispiel eines solchen Leistungsteilers ist in der Figur 2 dargestellt, welche eine Draufsicht auf die antennenseitige Oberfläche der Leiterplatte 5 zeigt. Der Leistungsteiler ist in koplanarer Leitungstechnik ausgeführt. Koplanar-Leitungen bestehen in bekannter Weise, wie z. B. aus der einen koplanaren Teiler beschreibenden EP 0 492 357 A1 hervorgeht, aus einem Innenleiter und aus einem demgegenüber durch einen Schlitz getrennten Außenleiter, der in der Regel auf Masse liegt. Der in der Figur 2 dargestellte Leistungsteiler ist durch eine Innenleiterstruktur gebildet, welche ringsherum von einem auf Masse liegenden Außenleiter 45 umgeben ist. Zu beiden Seiten ist der Innenleiter über einen Schlitz vom Außenleiter 45 getrennt. Durch Anwendung dieser Leitungstechnik ist es möglich, die Oberfläche der Leiterplatte 5 nahezu vollständig mit dem auf Masse liegenden Außenleiter 45 zu überdecken. Der Außenleiter 45 ist durch Schraffur auf der Oberfläche der Leiterplatte 5 in der Figur 1 und in der Figur 2 kenntlich gemacht.

Dadurch, dass bei dem in koplanarer Leitungstechnik ausgeführten Speisenetzwerk die Leiterplatte 5 mit einer Metallisierung bis auf die den Innenleiter abgrenzenden Schlitze vollständig metallisiert ist, entsteht auf sehr einfache Weise eine elektromagnetische Abschirmung zwischen der Antenne 1 und den Schaltkreisen 3 auf der gegenüberliegenden Seite der Leiterplatte 5. Das in Koplanar-Leitungstechnik ausgeführte Speisenetzwerk erfüllt also einerseits die Funktion einer Signalverbindung zwischen der Antenne 1 und den elektrischen Schaltkreisen 3 auf der gegenüberliegenden Seite der Leiterplatte 5 und andererseits die Funktion einer elektromagnetischen Abschirmung zwischen der Antenne 1 und den elektrischen Schaltkreisen 5.

Der in Figur 2 dargestellte Leistungsteiler besitzt ein erstes Tor 47, das über eine Durchkontaktierung mit Hochfrequenz-Schaltkreisen auf der gegenüberliegenden Seite der Leiterplatte 5 verbunden ist. Von diesem ersten Tor 47 führt eine Leitung 49 zu einer T-Verzweigung mit zwei symmetrischen Verzweigungsleitungen 51 und 53. Die Verzweigungsleitung 51 geht über in eine zweite Leitung 55, die zu dem ein zweites Tor bildenden Anschlusssegment 13 für die Antenne 1 führt. Die andere Verzweigungsleitung 53 geht in eine dritte Leitung 57 über, die zu dem ein drittes Tor darstellenden, mit der Antenne 1 verbundenen Anschlusssegment 15 führt. Die T-Verzweigung ist symmetrisch ausgebildet und deren Verzweigungsleitungen 51 und 53 sind an ihren Enden, an denen sie in die beiden Leitungen 55 und 57 übergehen, von einem Widerstand 59 (z. B. ein Chip-Widerstand) überbrückt. Ein so ausgebildeter Leistungsteiler wird auch als Wilkinson-Teiler bezeichnet. Ein solcher Wilkinson-Teiler ist z. B. in der US 5,489,880 beschrieben. Auf die Überkopplung zwischen den beiden Verzweigungsleitungen 51 und 53 mit einem Widerstand 59 kann auch verzichtet werden. Die zum Anschlusssegment 13 führende erste Leitung 55 ist gegenüber der zweiten Leitung 57 um λ/2 verlängert, so dass zwischen den an den beiden Anschlusssegmenten 13 und 15 auftretenden Signalanteilen eine 180°-Phasenverschiebung besteht. Die in der Figur 2 eingezeichneten Punkte stellen Durchkontaktierungen 61 dar, über die eine Masseverbindung zwischen dem Außenleiter 45 und eventuell noch ein oder mehreren weiteren in anderen Ebenen der Leiterplatte 5 angeordneten Masseleitungen hergestellt wird.

Die Figur 3 zeigt eine Seitenansicht einer Leiterplatte 5 mit einer darauf angeordneten Antenne 1, wie sie im Zusammenhang mit der Figur 1 beschrieben worden ist, und mit auf der gegenüberliegenden Seite angeordneten elektrischen Schaltkreisen 3. Die Besonderheit der Leiterplatte 5 besteht darin, dass sie aus mehreren übereinander gestapelten dielektrischen Schichten 63 und 65 besteht. Dabei weisen die dielektrischen Schichten 63 und 65 unterschiedliche Dielektrizitätskonstanten auf. Die der Antenne 1 benachbarte dielektrische Schicht 63 sollte eine niedrige Dielektrizitätskonstante (z. B. ε*ᵣ* ≈ 4) und die den elektrischen Schaltkreisen benachbarte dielektrische Schicht 65 sollte eine hohe Dielektrizitätskonstante (z. B. ε*ᵣ* ≈10) aufweisen. Ein Dielektrikum mit niedriger Dielektrizitätskonstante gewährleistet eine hohe Bandbreite für die Antenne 1, und für Hochfrequenz-Schaltkreise auf der anderen Leiterplattenseite ist eine hohe Dielektrizitätskonstante erforderlich, um eine hohe Güte und eine hohe Bandbreite zu erreichen. Beide dielektrischen Schichten 63 und 65 sollten durch eine Masseleitung 67 voneinander getrennt sein.

Die zwischen beiden dielektrischen Schichten 63 und 65 angeordnete Masseleitung 67 ist über Durchkontaktierungen mit der den Außenleiter des koplanaren Speisenetzwerks bildenden Metallisierung 45 zu verbinden. Diese Masseleitung 67 trägt ebenfalls zu einer elektromagnetischen Abschirmung zwischen der Antenne 1 und den elektrischen Schaltkreisen 3 bei. Des Weiteren kann auch noch eine Masseleitung 69 auf der von den elektrischen Schaltkreisen belegten Oberfläche der Leiterplatte 5 aufgebracht sein. Auch diese Masseleitung 69 ist über Durchkontaktierungen mit der mittleren Masseleitung 67 und dem Außenleiter 45 des koplanaren Speisenetzwerks zu verbinden.

Die Leiterplatte 5 kann auch aus mehr als nur zwei Lagen von dielektrischen Schichten aufgebaut sein, zwischen denen auch mehrere miteinander kontaktierte Masseleitungen angeordnet sein können.

## Patentansprüche

1. Vorrichtung zum Senden und/oder Empfangen von Radarstrahlen, wobei auf einer Seite einer Leiterplatte (5) mindestens eine Antenne (1) und auf der anderen Seite der Leiterplatte (5) elektrische Schaltkreise (3) angeordnet sind und Mittel (45) zur elektromagnetischen Abschirmung der elektrischen Schaltkreise (3) gegenüber der mindestens einen Antenne (1) vorhanden sind, **dadurch gekennzeichnet, dass** auf der antennenseitigen Oberfläche der Leiterplatte (5) ein in Koplanar-Leitungstechnik ausgeführtes Speisenetzwerk (45, 49, 51, 53, 55, 57), mit dem die mindestens eine Antenne (1) kontaktiert ist, aufgebracht ist und dass der auf Masse liegende Außenleiter (45) der Koplanar-Leitung die antennenseitige Oberfläche der Leiterplatte (5) soweit überdeckt, dass **dadurch** die geforderte Abschirmung zwischen der Antenne (1) und den elektrischen Schaltkreisen (3) entsteht.

2. Vorrichtung nach Anspruch 1, **dadurch gekennzeichnet, dass** das Speisenetzwerk als Leistungsteiler ausgebildet ist mit einem Tor (47), das mit einem Schaltkreis auf der dem Leistungsteiler gegenüberliegenden Seite der Leiterplatte (5) kontaktiert ist, und mit zwei weiteren Toren (13, 15), die mit zwei Anschlüssen (17, 19) der mindestens einen Antenne kontaktiert sind.

3. Vorrichtung nach einem der Ansprüche 1 oder 2, **dadurch gekennzeichnet, dass** die Antenne (1) aus einer als Strahlerelement wirkenden leitenden Platte (7) besteht, die mit Abstand über der Leiterplatte (5) angeordnet ist.

4. Vorrichtung nach Anspruch 3, **dadurch gekennzeichnet, dass** die leitende Platte (7) der Antenne (1) mindestens eine Stütze (9, 11) aufweist, welche auf der Leiterplatte (5) fixierbar ist.

5. Vorrichtung nach Anspruch 4, **dadurch gekennzeichnet, dass** die mindestens eine Stütze (9, 11) eine elektrische Verbindung zwischen der leitenden Platte (7) und dem Speisenetzwerk (45, 49, 51, 53, 55, 57) herstellt.

6. Vorrichtung nach einem der vorhergehenden Ansprüche, **dadurch gekennzeichnet, dass** die Leiterplatte (5) aus mehreren übereinander gestapelten dielektrischen Schichten (63, 65) mit unterschiedlichen Dielektrizitätskonstanten besteht, wobei diejenige dielektrische Schicht (63), auf der das Speisenetzwerk (45, 49, 51, 53, 55, 57) und die Antenne (1) angeordnet sind, eine geringere Dielektrizitätskonstante aufweist als diejenige dielektrische Schicht (65), auf der sich die elektrischen Schaltkreise (3) befinden.

7. Vorrichtung nach einem der vorhergehenden Ansprüche, **dadurch gekennzeichnet, dass** zwischen zwei dielektrischen Schichten (63, 65) eine Masseleitung (67) angeordnet ist, die mit dem Außenleiter (45) des koplanaren Speisenetzwerks (45, 49, 51, 53, 55, 57) über Durchkontaktierungen (61) in der Leiterplatte (5) verbunden ist.

8. Vorrichtung nach einem der vorhergehenden Ansprüche, **dadurch gekennzeichnet, dass** auf der mit den elektrischen Schaltkreisen (3) bestückten Seite der Leiterplatte (5) eine Masseleitung (69) aufgebracht ist, die mit dem Außenleiter (45) des koplanaren Speisenetzwerks (45, 49, 51, 53, 55, 57) und/oder mit ein oder mehreren anderen im Inneren der Leiterplatte (5) vorhandenen Masseleitungen (67) über Durchkontaktierungen (61) in der Leiterplatte (5) verbunden ist.

## Claims

1. Apparatus for transmission and/or reception of radar beams, with at least one antenna (1) being arranged on one side of a printed circuit board (5), and with electrical circuits (3) being arranged on the other side of the printed circuit board (5), and means (45) being provided for electromagnetic screening of the electrical circuits (3) from the at least one antenna (1), **characterized in that** a feed network (45, 49, 51, 53, 55, 57), which is designed using coplanar line technology, and with which the at least one antenna (1) makes contact is mounted on the antenna-side surface of the printed circuit board (5), and **in that** the outer conductor (45), which is at earth potential, of the coplanar line covers the antenna-side surface of the printed circuit board (5) to such an extent that this provides the required screening between the antenna (1) and the electrical circuits (3).

2. Apparatus according to Claim 1, **characterized in that** the feed network is in the form of a power splitter with a port (47) which makes contact with a circuit on the side of the printed circuit board (5) opposite the power splitter, and with two further ports (13, 15) which make contact with two connections (17, 19) of the at least one antenna.

3. Apparatus according to one of Claims 1 or 2, **characterized in that** the antenna (1) comprises a conductive plate (7) which acts as an antenna element and is arranged at a distance above the printed circuit board (5).

4. Apparatus according to Claim 3, **characterized in that** the conductive plate (7) of the antenna (1) has at least one support (9, 11) which can be fixed on the printed circuit board (5).

5. Apparatus according to Claim 4, **characterized in that** the at least one support (9, 11) makes an electrical connection between the conductive plate (7) and the feed network (45, 49, 51, 53, 55, 57).

6. Apparatus according to one of the preceding claims, **characterized in that** the printed circuit board (5) comprises a plurality of dielectric layers (63, 65) which are stacked one on top of the other and have different dielectric constants, with that dielectric layer (63) on which the feed network (45, 49, 51, 53, 55, 57) and the antenna (1) are arranged having a lower dielectric constant than that dielectric layer (65) on which the electrical circuits (3) are located.

7. Apparatus according to one of the preceding claims, **characterized in that** an earth line (67) is arranged between two dielectric layers (63, 65) and is connected to the outer conductor (45) of the coplanar feed network (45, 49, 51, 53, 55, 57) via plated-through holes (61) in the printed circuit board (5).

8. Apparatus according to one of the preceding claims, **characterized in that** an earth line (69) is applied to that side of the printed circuit board (5) which is fitted with the electrical circuits (3) and is connected to the outer conductor (45) of the coplanar feed network (45, 49, 51, 53, 55, 57) and/or to one or more other earth lines (67), which are provided in the interior of the printed circuit board (5), via plated-through holes (61) in the printed circuit board (5).

## Revendications

1. Dispositif d'émission et/ou de réception de faisceaux radar, dans lequel au moins une antenne (1) est disposée sur un côté d'une carte de circuit (5) et des circuits électriques (3) sont disposés sur l'autre côté de la carte de circuit (5), des moyens (45) de blindage électromagnétique des circuits électriques (3) vis-à-vis de la ou des antennes (1) étant prévus,
**caractérisé en ce que**
un réseau d'alimentation (45, 49, 51, 53, 55, 57) réalisé par la technique des conducteurs coplanaires et en contact avec la ou les antennes (1) est appliqué sur la surface de la carte de circuit (5) située du côté de l'antenne et
**en ce que** le conducteur extérieur (45) des conduits coplanaires qui est raccordé à la masse recouvre la surface de la carte de circuit (5) située du côté de l'antenne de telle sorte que l'on obtienne ainsi le blindage nécessaire entre l'antenne (1) et les circuits électriques (3).

2. Dispositif selon la revendication 1, **caractérisé en ce que** le réseau d'alimentation est configuré comme diviseur de puissance doté d'une porte (47) en contact avec un circuit situé sur le côté de la carte de circuit (5) opposé au diviseur de puissance et de deux autres portes (13, 15) en contact avec deux bornes de raccordement (17, 19) de la ou des antennes.

3. Dispositif selon l'une des revendications 1 ou 2, **caractérisé en ce que** l'antenne (1) est constituée d'une plaque conductrice (7) qui joue le rôle d'un élément radiant et qui est disposé à distance au-dessus de la carte de circuit (5).

4. Dispositif selon la revendication 3, **caractérisé en ce que** la plaque conductrice (7) de l'antenne (1) présente au moins un appui (9, 11) qui peut être fixé sur la carte de circuit (5).

5. Dispositif selon la revendication 4, **caractérisé en ce que** le ou les appuis (9, 11) établissent une liaison électrique entre la plaque conductrice (7) et le réseau d'alimentation (45, 49, 51, 53, 55, 57).

6. Dispositif selon l'une des revendications précédentes, **caractérisé en ce que** la carte de circuit (5) est constituée de plusieurs couches diélectriques (63, 65) empilées les unes au-dessus des autres et présentant des constantes diélectriques différentes, la couche diélectrique (63) sur laquelle le réseau d'alimentation (45, 49, 51, 53, 55, 57) et l'antenne (1) sont disposés ayant une constante diélectrique plus basse que la couche diélectrique (65) sur laquelle se trouvent les circuits électriques (3).

7. Dispositif selon l'une des revendications précédentes, **caractérisé en ce qu'**un conducteur de masse (67) qui est relié au conducteur extérieur (45) du réseau coplanaire d'alimentation (45, 49, 51, 53, 55, 57) par des contacts (61) qui traversent la carte de circuit (5) est disposé entre deux conducteurs diélectriques (63, 65).

8. Dispositif selon l'une des revendications précédentes, **caractérisé en ce qu'**un conducteur de masse (69) relié par le conducteur extérieur (45) du réseau coplanaire d'alimentation (45, 49, 51, 53, 55, 57) et/ou à un ou plusieurs autres conducteurs de masse (67) prévus à l'intérieur de la carte de circuit (5) par des contacts (61) qui traversent la carte de circuit (5) est appliqué sur le côté de la carte de circuit (5) dotée des circuits électriques (3).
